# EUROPEAN PATENT SPECIFICATION

(11) **EP 2 932 132 B1**
(45) Date of publication and mention of the grant of the patent: **21.10.2020**
(21) Application number: 13824379.5
(22) Date of filing: 11.12.2013
(51) Int. Cl.: F16D 55/228

(54) **CALIPER BODY, PARTICULARLY FOR DISC BRAKES**
SATTELKÖRPER, INSBESONDERE FÜR SCHEIBENBREMSEN
CORPS D'ÉTRIER, EN PARTICULIER POUR FREINS À DISQUE

(30) Priority: 11.12.2012 IT MO20120303
(43) Date of publication of application: 21.10.2015
(73) Proprietor: Iorio, Franco, 41028 Serramazzoni (IT)
(72) Inventor: Iorio, Franco, 41028 Serramazzoni (IT)
(74) Representative: Modiano, Micaela Nadia
(86) International application number: PCT/IB2013/060806
(87) International publication number: WO 2014/091423

(56) References cited:
- EP-A1- 1 167 804
- EP-A1- 1 898 116
- WO-A1-2012/153355

## Description

The present invention relates to a caliper body, particularly for disc brakes.

Disc brakes are known which mainly comprise a brake caliper that is arranged so as to straddle the outer peripheral end of a brake disc and has within it braking means that, as a consequence of their activation, make it possible to slow or lock the brake disc which is integral with a wheel or with an element in rotation. In particular, the braking means comprise at least one brake cylinder that is provided on the inner surface of the brake caliper, and in which a respective hydraulic piston can move closer to or away from the braking surface of the brake disc. Associated with the moving end of the piston is at least one brake pad that, in contact with the braking surface of the brake disc, tends to slow its rotation.

The most widespread brake calipers have an elongated body divided into two parts that are practically mirror-symmetrical according to a plane that is normal to the rotation axis of the brake disc. Each of these parts is usually made of metal and can be obtained by melting or by machining and removal of shavings, as well as by forging. Each part of the body of the brake caliper is provided internally with a braking means and, together with the other part, forms a single body thanks to the presence of joining bridge elements, such as for example pins or threaded cylindrical elements. During the braking action the braking means transfer the mechanical stresses to the body of the brake caliper, and the bridge elements bear the heaviest burden in that they are the only elements that join the two separable parts of the body. After a high number of operating cycles and/or abrupt braking actions, especially in sports competitions, the bridge elements tend to become damaged, and thus do not guarantee the correct adhesion of the brake pad to the braking surface of the disk, thus defeating the braking action or rendering it less effective.

In order to be able to overcome such drawback, some brake calipers are fitted with overdimensioned bridge elements or with a greater number of bridge elements, thus conferring a greater robustness on the entire brake caliper structure during the braking action.

Although such conventional solution confers greater safety in using the brake, there are some drawbacks which include a considerable increase in the outer encumbrances of the structure, as well as a consequent increase in the overall weight of the brake caliper. In fact, the brake caliper is usually installed in cramped spaces and large dimensions of its body could impede the rotation of the wheel rim or limit the steering angle of the wheel proper, and also worsen the aerodynamic performance, thus considerably increasing the fluid dynamic resistance.

In order to overcome at least in part the above mentioned drawbacks, single-piece brake calipers are known which are made of metal. Such brake calipers make it possible to discharge the stresses deriving from the braking action on a central, highly robust portion of the body of the brake caliper which is interposed between the two lateral portions in which the braking means are present. Furthermore, such brake calipers have a more compact body with respect to the previous solution, which increases both the fluid dynamic efficiency, and also the freedom of movement of the wheel.

However, even such conventional solution suffers some drawbacks which include the high cost of production in that the machining to be performed in order to obtain the brake cylinders in which the pistons can slide require special apparatuses that operate in minimal spaces, as well as a lengthy machining time which is due to the continuous variation of the orientation of the piece to be machined on the machine tool in order to optimize the finishing processes. In addition to this, it should be noted that a caliper body made of metal is subject to heat deformations following its overheating owing to the high temperatures that can arise on the surfaces of the brake pads. Such heat deformations can modify the geometry of the body of the brake caliper, thus not guaranteeing a correct braking action. Furthermore, the overheating of the brake induces an increase in temperature of the liquid present inside the braking circuit, varying its viscosity and consequently modifying the performance with respect to the design performance.

Lastly, single-piece brake calipers are known which are similar to the previous implementation solutions, but which are provided with a body that is made entirely of composite material. Such brake calipers are preferred to the previous ones because they make it possible to obtain a considerable weight reduction, and they prevent buildup of the heat given off by the brake pads, thus limiting the variation of temperature of the liquid present in the braking circuit.

However, even such conventional brake calipers are not devoid of drawbacks which include the high cost of production. In fact, obtaining the inner surfaces of the brake cylinders in which the pistons for actuating of the brake pads can move requires a sliding surface with extremely low roughness in order to ease the movement of the piston and prevent leaks of the liquid of the braking circuit; such finishing work is extremely costly on surfaces made of composite material.

Moreover, such brake calipers, like the previous ones, impede the substitution of only the brake cylinders of the braking means in the event of breakage, requiring instead the complete replacement of the brake caliper because the brake cylinders are provided on the inner surface of the body of the brake caliper.

WO 2012/153355 discloses a caliper body having a combination of elements as set forth in the pre-characterizing portion of the appended claim 1.

The aim of the present invention consists of providing a caliper body, particularly for disc brakes, which eliminates the drawbacks and overcomes the limitations of the known art, by ensuring a correct adhesion of the brake pads to the braking surface of the disk even after intensive use of the brake.

Within this aim, an object of the present invention is to provide a caliper body that has contained dimensions of space occupation, while limiting its overall weight and increasing the freedom of movement of the wheel.

Another object of the invention consists of providing a caliper body that limits the overheating of the liquid of the braking circuit.

Another object of the invention consists of providing a body that is capable of offering the widest guarantees of reliability and safety in use.

Another object of the invention consists in providing a caliper body that is easy to implement and economically competitive when compared to the known art.

In accordance with the invention, there is provided a caliper body as defined in the appended claims.

Further characteristics and advantages of the invention will become better apparent from the detailed description of a preferred, but not exclusive, embodiment of a caliper body, particularly for disc brakes, which is illustrated for the purposes of non-limiting example in the accompanying drawings wherein:

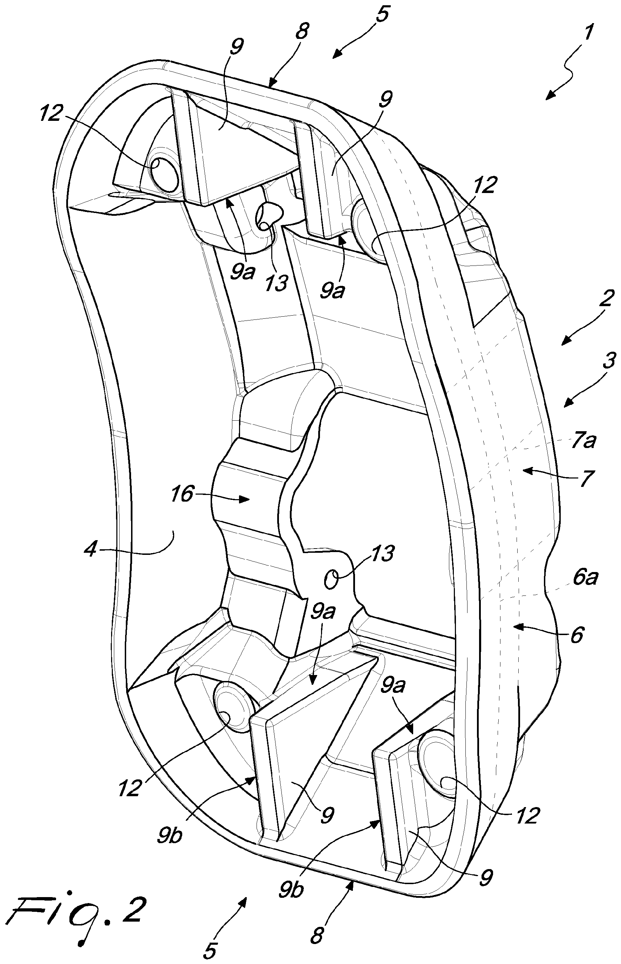

Figures 1 and 2 are two different perspective schematic views of an embodiment of a caliper body, particularly for disc brakes, according to the invention;

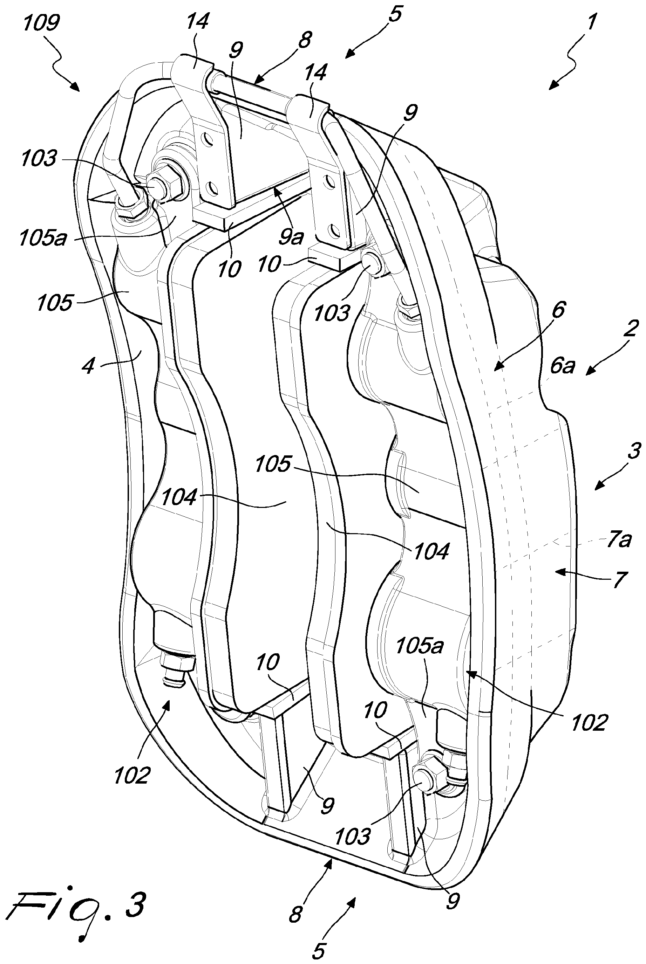

Figure 3 is a perspective schematic view of a caliper body provided with braking means of a brake disc, according to the invention;

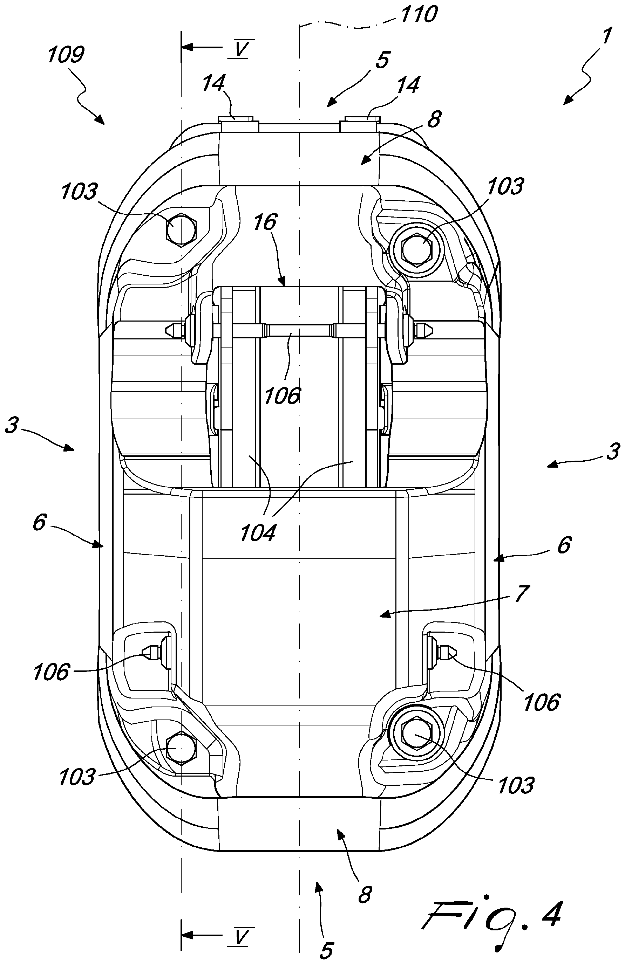

Figure 4 is a side elevation schematic view of the caliper body shown in Figure 3;

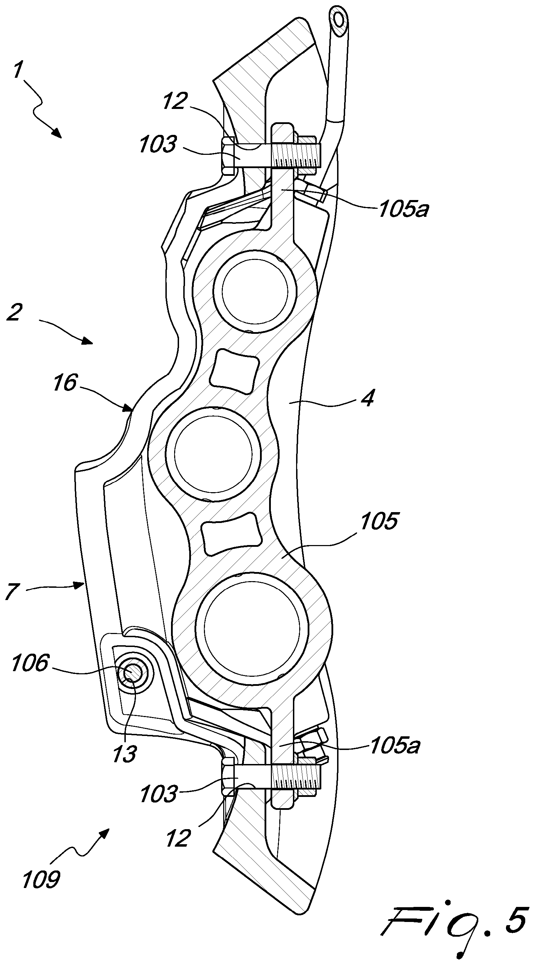

Figure 5 is a cross-sectional schematic view of the caliper body shown in Figure 4, taken along the line V-V;

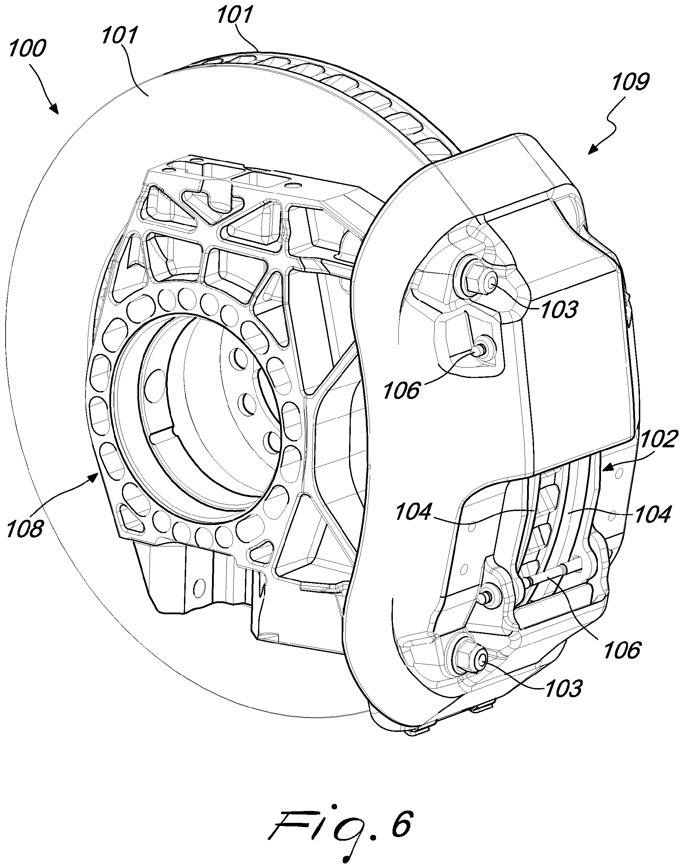

Figure 6 is a perspective schematic view of the caliper body in Figure 3, arranged so as to straddle a brake disc;

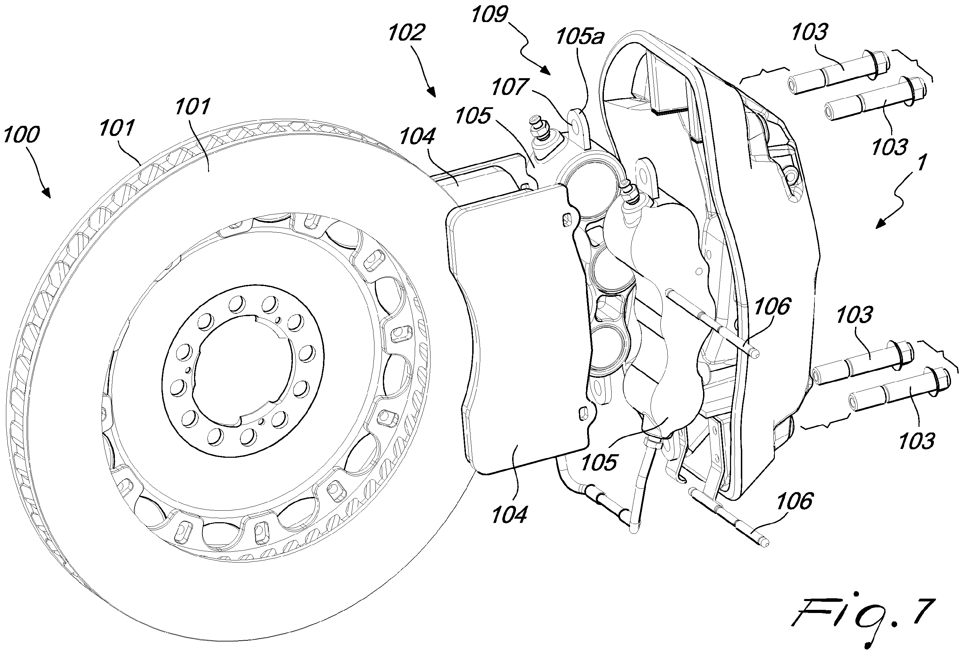

Figure 7 is a partially exploded perspective schematic view of Figure 6.

With reference to the figures, the caliper body, particularly for disc brakes of the type comprising at least one brake disc 100 that is provided with two opposite braking surfaces 101 upon which it is possible to actuate respective braking means 102, is generally designated by the reference numeral 1 and comprises a central portion 2 that has two substantially opposite sides from which two lateral portions 3 protrude which are intended to face the two opposite braking surfaces 101 of the brake disc 100 when the caliper body is arranged so as to straddle the brake disc 100.

According to the invention, the caliper body 1 is in one piece and made of composite material constituted by a basic matrix in which appropriately oriented reinforcement fibers are dispersed. Furthermore, according to the invention, each one of the lateral portions 3 comprises a seat for accommodating respective braking means 102 which can be associated with the caliper body 1 by the interposition of connecting means.

The caliper body 1 further comprises two connecting portions 5 that are interposed between the free ends of the two lateral portions 3 so as to define a continuous surface. Advantageously, the flaps of the portions 3 and 5 define a continuous perimetric containment ring 6 in which the reinforcement fibers are arranged so as to be oriented along the perimeter of the containment ring.

Two portions of the containment ring 6 which are arranged on each of the lateral portions 3 are mutually connected thanks to a connecting band 7 that is present on the central portion 2 and which transversely crosses the caliper body 1. The reinforcement fibers of the connecting band 7 are arranged substantially so as to be oriented parallel to each other and along the connecting band proper. In particular, such fibers are arranged substantially at right angles to a central transverse plane 110 which is substantially parallel to mutually facing surfaces 4 of the two lateral portions 3 and which is transverse with respect to the central portion 2, and is parallel to the braking surfaces 101. Furthermore, the reinforcement fibers of the connecting band 7 are substantially at right angles to the reinforcement fibers of the portions of the containment ring 6 to which they are connected.

Each one of the connecting portions 5 comprises at least one respective reinforcement region 8, proximate to the containment ring 6, in which the reinforcement fibers are arranged substantially so that they are oriented according to at least two mutually incident directions. Specifically, the reinforcement fibers of the reinforcement regions 8 are mutually perpendicular and arranged substantially inclined at 45° with respect to the central transverse plane 110 and to the reinforcement fibers of the portions of the containment ring 6 to which they are connected.

In addition to the regions of the caliper body 1 mentioned above, where the reinforcement fibers are conveniently oriented, there are connecting areas that are interposed between the containment ring 6, the connecting band 7 and the reinforcement regions 8 in which the reinforcement fibers are oriented in a random manner.

The reinforcement fibers described can be constituted by at least a material selected from the group comprising aramid fibers, such as for example Kevlar® or Twaron®, polyamide fibers, polyester fibers, such as for example Dyneema® and Diolen®, carbon fibers and similar fibers with a high modulus of resistance. The reinforcement fibers are embedded in a basic matrix that is constituted by at least a material selected from the group comprising phenolic resins, cyanate ester resins, vinyl ester resins, epoxy resins, thermoplastic resins and graphite.

The caliper body 1 further comprises two protrusions 9 which extend in proximity to the containment ring 6. Such protrusions 9 are intended to contrast the movement of the braking means 102 during the braking action along two directions that are mutually opposite and are coplanar with respect to the braking surface 101 of the brake disc 100. Each one of the two protrusions 9 has a work surface 9a, associated with which is a means of protection 10 that is intended to directly contact the braking means 102 during the braking action. Advantageously, such protecting means 10 are constituted by a ceramic material or a thermally insulating material.

The seats for accommodating the braking means 102 are provided on the facing surfaces 4 and the connecting means of the braking means comprise threaded elements 103 that can be accommodated in respective through holes 12 which are provided in the areas for connecting the caliper body 1. As an alternative or in addition to the threaded elements 103, the connecting means can comprise adhesive means which can be interposed between a contact surface of the braking means 102 that is designed to adhere to the corresponding facing surface 4 and that facing surface.

The caliper body 1 thus defined and the braking means 102 arranged inside define a disc brake 109. In particular, the braking means 102 have at least one tab 105a on which a fixing slot 107 is provided. The fixing slot 107 arranged coaxial to the respective through hole 12 allows the passage of the threaded element 103 for the adhesion of the braking means 102 to the caliper body 1.

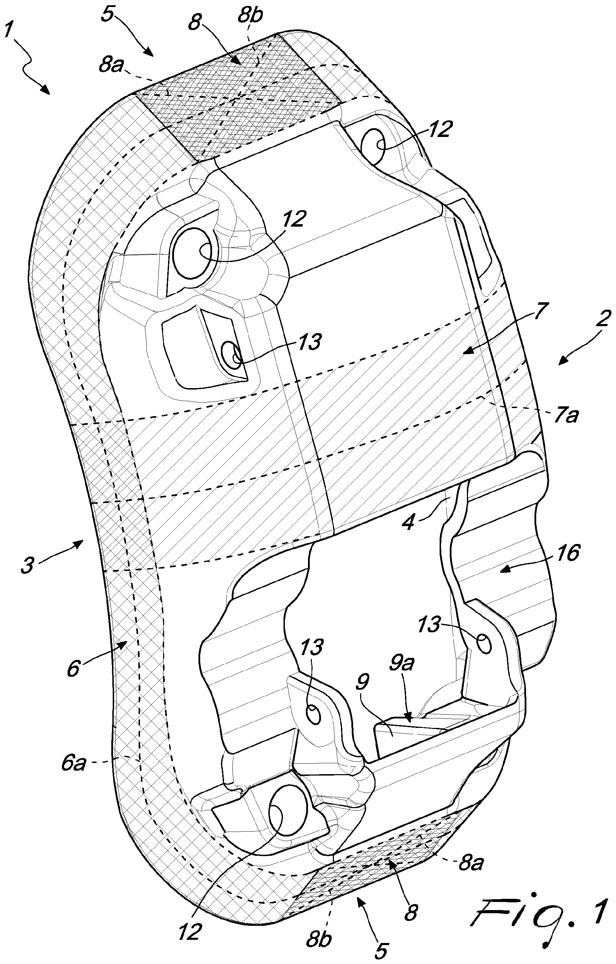

In the embodiment illustrated in the accompanying figures, the caliper body 1 is contoured substantially so as to define the shape of a carapace with a concave inner surface, designed to accommodate the braking means 102, and a convex outer surface. The caliper body 1 is further defined centrally by the central portion 2 and laterally by the mutually contiguous portions 3 and 5. Each one of the portions 3 and 5 has a continuous perimetric portion that, together with the contiguous portions, make up the containment ring 6 the extension of which is schematically indicated in Figure 1. The reinforcement fibers of the containment ring 6 are arranged substantially parallel to the dotted line 6a. The reinforcement regions 8 are substantially quadrangular and their extension is schematically indicated in Figure 1. The reinforcement regions 8 are overlapped on the containment ring 6 and extend from the flap of the respective connection portion 5 toward the central portion 2. The reinforcement fibers of the reinforcement regions 8 are arranged substantially parallel to the dotted lines 8a and 8b which are mutually perpendicular and inclined approximately at 45° with respect to the central transverse plane 110. Finally, the connecting band 7 is substantially C-shaped in transverse cross-section and each of its ends is overlapping on the containment ring 6. The extension of the connecting band 7 is schematically indicated in Figure 1 and its reinforcement fibers are substantially arranged parallel to the dotted line 7a. The overlapping of the connecting band 7 and of the reinforcement regions 8 on the containment ring 6 prevents the reinforcement fibers in each region from hampering each other and so vary their orientation. Such overlapping ensures the correct orientation of every fiber in every region. The possibility is not ruled out however of ordered intertwining between the individual reinforcement fibers of each region, while at the same time ensuring their correct orientation. In the remaining portions of the caliper body 1 the reinforcement fibers are mainly oriented in a random manner, without preferring a direction of laying in particular.

From the inner surface of the caliper body 1 extend four protrusions 9, two for each opposite end of the central portion 2 from which the lateral portions 3 extend. Each protrusion 9 has the respective work surface 9a, substantially transverse to the central portion 2, on which the means of ceramic material which, in other embodiments, can be substituted by plates that are constituted by thermally insulating material and are sufficiently strong to withstand the forces of friction owing to the action of the braking means 102. Such plate can be directly glued to the side to which it adheres, or it can be put in place by lamination during the step of making the caliper body 1. Each protrusion 9 has a secondary side 9b that is perpendicular to the work surface 9a and two of the protrusions 9 have respective elements 14 for retaining hydraulic ducts of the braking means 102.

Moreover, the caliper body 1 has four through holes 12 for the passage of respective threaded elements 103. Such through holes 12 are provided in the areas for connecting on the connecting portions 5. Furthermore, there are eyelets 13 provided on the lateral portions 3 and positioned so as to be mutually facing and coaxial. Finally, there is an aeration opening 16 defined on the central portion 2 which connects the inner surface with the outer surface of the caliper body 1, thus facilitating the maintenance and mounting of the braking means 102.

In this particular embodiment the braking means 102 shown comprise two brake pads 104 which are actuated by hydraulic pistons that can move in respective sliding seats that are provided in the two hydraulic devices 105. Such brake pads 104 can move alternately towards and away from the two opposite braking surfaces 101 of the brake disc 100. Each brake pad 104 has sliding slots that are associated with respective guide rods 106 that can be installed in each pair of slots 13. Each hydraulic device 105 has, at the respective ends, tabs 105a in which the fixing slot 107 for the passage of the threaded means 103 is provided. Conveniently, two of the four through holes 12 arranged on the same side define the anchor points of a chassis 108 for supporting the brake, which can be installed on a wheel hub. Such through holes 12 have a greater depth than the other holes and the adjacent reinforcement fibers are mainly oriented toward the containment ring 6. The threaded elements 103 used can be engaged by screw-and-nut coupling with respective nuts or with threaded holes defined in the supporting chassis 108.

Operation of the body is clear and evident from the foregoing description, since that, following the installation dei braking means 102 by way of the threaded means 103 that are engaged in the through holes 12, the guide rods 106 that support the brake pads 104 in the slots 13, and also the operating connection of the hydraulic devices 105 to the respective supply circuit, the disc brake 109 can be installed so as to straddle a brake disc 100 and be used like a normal, conventional brake in order to slow or completely lock the brake disc. Furthermore, in order to ensure a perfect adhesion of the braking means 102 to the facing surfaces 4 of the caliper body 1, adhesive means can be provided which are to be interposed between the above mentioned two elements.

During the braking action the brake pads 104 transmit mechanical reaction loads directly, and indirectly, to the caliper body 1. In particular, the brake pads 104 tend to adhere to the braking surfaces 101, moving slightly according to the direction of rotation of the brake disc 100. Such movement tends to make the brake pads 104 advance until they make contact with the protecting means 10 arranged on the protrusions 9. The protecting means 10 impede the friction of the brake pads 104 on the work surface 9a and prevent the transfer of heat thereto, since the temperature of the brake pads 104 increases considerably during the braking action. Moreover, the protecting means 10 transfer the shearing stresses to the protrusions 9 which, consequently, transfer them to the containment ring 6. The containment ring 6, in turn, takes advantage of its continuous shape structure and distributes the forces localized at the base of the protrusions 9 to its entire area of extension, thus adequately withstanding such forces without yielding at all.

During the action the braking means 102 drive the pads brake 104 toward the braking surface 101 and, by reaction, are subjected to opposing forces that tend to mutually distance the lateral portions 3 to which the braking means 102 are adherent, seeking to deform the caliper body 1. Such bending forces are held by the connecting band 7 which, acting on the lateral portions 3, prevents them from being distanced. Conveniently, the containment ring 6 also tends to absorb part of such mechanical stresses. Furthermore, the different actions in reaction to shear and bending deriving from the braking action are also concentrated on the head portions of each connection portion 5, giving rise to mechanical forces in directions that are transverse with respect to the central transverse plane 110. Advantageously, the fibers of the reinforcement regions 8 are conveniently oriented in order to support the combination of the above mentioned loads. Moreover, the caliper body 1 is subjected to further mechanical forces which are smaller than those mentioned above, the orientation of which is difficult to predict in advance. For this reason, the remaining regions of the caliper body 1 have reinforcement fibers that are arranged in a random manner so as to adequately react to any force in any direction. Another region that is very heavily stressed during the braking action is the portion adjacent to the through holes 12 that are used as anchor points to the supporting chassis 108. The reinforcement fibers of such region are conveniently oriented to transfer the mechanical loads directly onto the containment ring 6, thus avoiding the concentration of mechanical forces at individual points.

In practice it has been found that the caliper body, according to the present invention, achieves the intended aim and objects in that it prevents the deformation of the body proper and it ensures the correct positioning, and the correct operation, of the braking means during the braking action. In fact, thanks to the distribution resulting from the orientation of the fibers over wide regions of the caliper body, the caliper body is not subject to deformations even after intensive use, thus ensuring a correct operation over time. Moreover, the distribution thus described of the reinforcement fibers increases the rigidity and the overall strength of the caliper body.

Another advantage of the caliper body according to the invention consists in that it has a very low weight and an extremely compact shape with respect to conventional solutions. In fact, the composite material, by its nature, ensures high strength with reduced weight and size with respect to brake bodies made of metal or metal alloys. Furthermore, the arrangement thus described of the reinforcement fibers makes it possible to adequately support the mechanical loads that are present during the use of the brake, thus requiring a layer of composite material that is much thinner than conventional brake bodies, with much smaller dimensions and much lower weights and production costs. Advantageously, the reduction of the weight of the caliper body makes it possible to considerably reduce the weight of the unsprung masses, thus greatly increasing the road safety and maneuverability of the vehicle on uneven road surfaces. In fact, the reduction of the unsprung masses minimizes the inertia of those masses, in this manner ensuring a quick response of the suspension and shock absorption apparatus of the vehicle which, being more reactive, ensures a continuous adhesion of the tire to the road surface.

Another advantage of the caliper body according to the invention consists in that it limits overheating of the liquid of the braking circuit because the composite material of which the caliper body is constituted has thermal insulating properties. In this manner the caliper body does not accumulate heat during the braking phases, thus preventing such heat from being transferred to the liquid of the braking circuit. Furthermore, the insulating properties of the caliper body prevent deformations thereof in the event of excessive localized overheating, as is usually found in brake bodies made of metallic material.

Another advantage of the caliper body according to the invention consists in that it can permit the interchangeability of the braking means alone without requiring the complete substitution of the caliper body. In fact, in the event of breakage the braking means can be easily replaced by acting on the retention means, avoiding the substitution of the whole caliper body, as occurs with conventional brakes because in such solutions the braking means are provided on their inner surface. Such solution advantageously makes it possible to drastically reduce the costs of maintenance of the brake assembly.

Another advantage of the caliper body according to the invention consists in that it can accommodate different types of braking means within it, thus conferring a high versatility to the caliper body. In fact, the caliper body has no circuit for supplying the braking means or other devices for commanding the braking means, thus allowing the installation of different types of braking means by way of the respective retention means that can engage the accommodation seats that are provided on the caliper body. Such versatility enables the use of braking means with different types of hydraulic apparatuses, as well as different types of braking means, such as for example braking means of the electromechanical type.

Another advantage of the caliper body according to the invention consists in that it requires no finishing treatment, further reducing the cost of production. In fact, conventional brake bodies made of metallic material require a step of painting in order to prevent rust or corrosion of its surface in contact with the various different atmospheric agents. Furthermore, such painting is extremely costly in that the coating of protective paint must be sufficiently thick to prevent stones or foreign objects, during the rolling of the wheel, from accidentally striking the caliper body and removing a portion of the protective coating and leaving the metal in direct contact with atmospheric agents. Advantageously, the caliper body made of composite material is not subject to any chemical alterations even if it is located in direct contact with atmospheric agents and for this reason it does not require any step of painting or spreading of particular protective coatings.

Furthermore, we point out that the caliper body according to the invention has an optimal plastic behavior in the event of breakage, thus guaranteeing, at least partly, the braking action. In fact, conventional caliper bodies, made mainly of aluminum alloy, following a high mechanical load, can give rise to fractures of the brittle type, disastrously separating into multiple parts without guaranteeing any adhesion of the braking means to the braking surfaces. The caliper body made of composite material described above, when subjected to excessive mechanical loads, could tear, progressively breaking the individual reinforcement fibers; during such progressive breakage the caliper body does not guarantee a perfect adhesion of the braking means to the braking surfaces; however, it does enable an at least partial adhesion of the braking means to the brake disc, thus allowing the wheel to be slowed, even if less effectively.

The caliper body, particularly for disc brakes, thus conceived is susceptible of numerous modifications and variations all of which are within the scope of the appended claims.

Moreover, all the details may be substituted by other, technically equivalent elements.

In practice the materials employed, provided they are compatible with the specific use, and the contingent dimensions and shapes, may be any according to requirements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A caliper body (1), particularly for disc brakes of the type comprising at least one brake disc (100) that is provided with two opposite braking surfaces (101) upon which it is possible to actuate respective braking means (102), and which comprises a central portion (2) that has two substantially opposite sides from which two lateral portions (3) protrude which are intended to face the two opposite braking surfaces (101) when the caliper body (1) is arranged so as to straddle said brake disc, said caliper body (1) being in one piece made of composite material constituted by a basic matrix in which appropriately oriented reinforcement fibers are dispersed and in that each one of said lateral portions (3) comprises a seat for accommodating respective braking means (102) which can be associated with said caliper body (1) by the interposition of connecting means, the caliper body (1) being **characterized in that** it comprises two connecting portions (5) that are interposed between the free ends of said two lateral portions (3) so as to define a continuous surface, said two lateral portions (3) and said two connecting portions (5) having respective flaps so as to define a continuous perimetric containment ring (6) in which the reinforcement fibers are arranged so as to be oriented along the perimeter of said containment ring.

2. The caliper body (1) according to claim 1, **characterized in that** said central portion (2) comprises a connecting band (7), the two opposite ends of which are associated with respective portions of said containment ring (6), each arranged on a corresponding lateral portion (3), said connecting band (7) having reinforcement fibers arranged substantially so as to be oriented parallel to each other along said connecting band.

3. The caliper body (1) according to claim 2, **characterized in that** the reinforcement fibers of said connecting band (7) are arranged substantially at right angles to a central transverse plane (110) of said caliper body, said central transverse plane (100) being substantially parallel to facing surfaces (4) of said lateral portions (3) and transverse with respect to said central portion (2).

4. The caliper body (1) according to one or more of the preceding claims, **characterized in that** each one of said connecting portions (5) comprises at least one respective reinforcement region (8), proximate to said containment ring (6), in which the reinforcement fibers are arranged substantially so that they are oriented according to at least two mutually incident directions.

5. The caliper body (1) according to claim 4, **characterized in that** said at least two incident directions are mutually perpendicular and are inclined substantially at 45° with respect to said central transverse plane (110).

6. The caliper body (1) according to one or more of the preceding claims 4 and 5, **characterized in that** it comprises connecting areas that are interposed between said containment ring (6), said connecting band (7) and said reinforcement regions (8) in which the reinforcement fibers are oriented in a random manner.

7. The caliper body (1) according to one or more of the preceding claims, **characterized in that** each one of said accommodation seats is provided on a respective facing surface (4).

8. The caliper body (1) according to one or more of the preceding claims, **characterized in that** said connecting means comprise threaded elements (103) that can be accommodated in respective through holes (12) provided in the caliper body proper.

9. The caliper body (1) according to one or more of the preceding claims, **characterized in that** it comprises at least two protrusions (9) that are proximate to said containment ring (6), said at least two protrusions (9) being intended to contrast the movement of the braking means (102) during the braking action along two directions that are mutually opposite and are coplanar with respect to the braking surfaces (101) of the brake disc (100).

10. The caliper body (1) according to claim 9, **characterized in that** it comprises protecting means (10) for said at least two protrusions (9) that are designed to be contacted directly by the braking means (102) during the braking action.

11. The caliper body (1) according to claim 10, **characterized in that** said protecting means (10) are constituted by a ceramic material.

12. The caliper body (1) according to one or more of the preceding claims, **characterized in that** said reinforcement fibers are constituted by at least a material selected from the group that comprises aramid fibers, polyamide fibers, polyester fibers and carbon fibers, and said basic matrix is made with at least a material selected from the group that comprises phenolic resins, cyanate ester resins, vinyl ester resins, epoxy resins, thermoplastic resins and graphite.

13. A disc brake (109) of the type comprising at least one brake disc (100) provided with two opposite braking surfaces (101) upon which it is possible to actuate respective braking means (102), **characterized in that** it comprises a caliper body (1), according to one or more of the preceding claims, which is arranged so as to straddle the brake disc proper and is associated with said braking means (102) by the interposition of said connecting means, said braking means (102) comprising at least one tab (105a) that is provided with a fixing slot (107) and said caliper body (1) comprising at least one through hole (12), each one of said connecting means being accommodated in said at least one fixing slot (107) and in a respective through hole (12) for the connection of said braking means (102) with said caliper body (1).

## Patentansprüche

1. Ein Sattelkörper (1), insbesondere für Scheibenbremsen von der Art, die mindestens eine Bremsscheibe (100) umfasst, die mit zwei gegenüberliegenden Bremsflächen (101) versehen ist, an welchen entsprechende Bremsmittel (102) betätigt werden können, und die einen zentralen Abschnitt (2) umfasst, welcher zwei im Wesentlichen gegenüberliegende Seiten hat, von denen zwei seitliche Abschnitte (3) abstehen, die dazu bestimmt sind, den zwei gegenüberliegenden Bremsflächen (101) zugewandt zu sein, wenn der Sattelkörper (1) so angeordnet ist, dass er die Bremsscheibe überspannt; wobei der Sattelkörper (1) einteilig aus Verbundmaterial hergestellt ist, bestehend aus einer Grundmatrix, in welcher passend ausgerichtete Verstärkungsfasern verteilt sind, und dadurch, dass jeder der seitlichen Abschnitte (3) einen Sitz zum Aufnehmen entsprechender Bremsmittel (102) umfasst, die durch Anordnung von Verbindungsmitteln dazwischen mit dem Sattelkörper (1) verbunden werden können; wobei der Sattelkörper (1) **dadurch gekennzeichnet ist, dass** er zwei Verbindungsabschnitte (5) umfasst, die zwischen den freien Enden der zwei seitlichen Abschnitte (3) angeordnet sind, um eine durchgehende Oberfläche zu bestimmen; wobei die zwei seitlichen Abschnitte (3) und die zwei Verbindungsabschnitte (5) entsprechende Flügel haben, um einen durchgehenden perimetrischen Einfassungsring (6) zu bestimmen, in welchem die Verstärkungsfasern angeordnet sind, um entlang dem Umfang des Einfassungsrings ausgerichtet zu sein.

2. Der Sattelkörper (1) gemäß Anspruch 1, **dadurch gekennzeichnet, dass** der zentrale Abschnitt (2) einen Verbindungsring (7) umfasst, dessen gegenüberliegende Enden mit entsprechenden Abschnitten des Einfassungsrings (6) verbunden sind, jeweils angeordnet an einem entsprechenden seitlichen Abschnitt (3), wobei der Verbindungsring (7) Verstärkungsfasern hat, die im Wesentlichen angeordnet sind, um entlang dem Verbindungsring parallel zueinander ausgerichtet zu sein.

3. Der Sattelkörper (1) gemäß Anspruch 2, **dadurch gekennzeichnet, dass** die Verstärkungsfasern des Verbindungsrings (7) im Wesentlichen in rechten Winkeln zu einer zentralen transversalen Ebene (110) des Sattelkörpers angeordnet sind, wobei die zentrale transversale Ebene (100) im Wesentlichen parallel zu gegenüberliegenden Oberflächen (4) der seitlichen Abschnitte (3) und quer zu dem zentralen Abschnitt (2) ist.

4. Der Sattelkörper (1) gemäß einem oder mehreren der obigen Ansprüche, **dadurch gekennzeichnet, dass** jeder der Verbindungsabschnitte (5) mindestens einen entsprechenden Verstärkungsbereich (8) in der Nähe des Einfassungsrings (6) umfasst, in welchem die Verstärkungsfasern im Wesentlichen so angeordnet sind, dass sie in mindestens zwei zueinander einfallenden Richtungen ausgerichtet sind.

5. Der Sattelkörper (1) gemäß Anspruch 4, **dadurch gekennzeichnet, dass** die mindestens zwei einfallenden Richtungen senkrecht zueinander und im Wesentlichen um 45° zu der zentralen transversalen Ebene (110) geneigt sind.

6. Der Sattelkörper (1) gemäß einem oder mehreren der obigen Ansprüche 4 und 5, **dadurch gekennzeichnet, dass** er Verbindungsbereiche umfasst, die zwischen dem Einfassungsring (6), dem Verbindungsring (7) und den Verstärkungsbereichen (8) angeordnet sind und in denen die Verstärkungsfasern in zufälliger Anordnung ausgerichtet sind.

7. Der Sattelkörper (1) gemäß einem oder mehreren der obigen Ansprüche, **dadurch gekennzeichnet, dass** jeder der Aufnahmesitze in einer entsprechenden gegenüberliegenden Oberfläche angebracht ist.

8. Der Sattelkörper (1) gemäß einem oder mehreren der obigen Ansprüche, **dadurch gekennzeichnet, dass** die Verbindungsmittel Gewindeelemente (103) umfassen, die in entsprechende Durchgangslöcher (12) aufgenommen werden können, welche im Sattelkörper selbst angebracht sind.

9. Der Sattelkörper (1) gemäß einem oder mehreren der obigen Ansprüche, **dadurch gekennzeichnet, dass** er mindestens zwei Vorsprünge (9) umfasst, die nahe dem Einfassungsring (6) liegen, wobei die mindestens zwei Vorsprünge (9) dazu dienen, der Bewegung der Bremsmittel (102) während des Bremsvorgangs in zwei Richtungen entgegenzuwirken, die einander entgegengesetzt sind, und koplanar mit den Bremsflächen (101) der Bremsscheibe (100) sind.

10. Der Sattelkörper (1) gemäß Anspruch 9, **dadurch gekennzeichnet, dass** er Schutzvorrichtungen (10) für die mindestens zwei Vorsprünge (9) umfasst, die konstruiert sind, um während des Bremsvorgangs in direktem Kontakt mit den Bremsmitteln (102) zu stehen.

11. Der Sattelkörper (1) gemäß Anspruch 10, **dadurch gekennzeichnet, dass** die Schutzvorrichtungen (10) aus einem Keramikmaterial bestehen.

12. Der Sattelkörper (1) gemäß einem oder mehreren der obigen Ansprüche, **dadurch gekennzeichnet, dass** die Verstärkungsfasern aus mindestens einem Material bestehen, das gewählt ist aus der Gruppe, die Folgendes umfasst: Aramidfasern, Polyamidfasern, Polyesterfasern und Carbonfasern; und die Grundmatrix mit mindestens einem Material hergestellt ist, das gewählt ist aus der Gruppe, die Phenolharze, Cyanatesterharze, Vinylesterharze, Epoxidharze, thermoplastische Harze und Graphit umfasst.

13. Eine Scheibenbremse (109) von der Art, die mindestens eine Bremsscheibe (100) umfasst, die mit zwei gegenüberliegenden Bremsflächen (101) versehen ist, an welchen entsprechende Bremsmittel (102) betätigt werden können, **dadurch gekennzeichnet, dass** sie einen Sattelkörper (1) gemäß einem oder mehreren der obigen Ansprüche umfasst, der angeordnet ist, um die Bremsscheibe selbst zu überspannen, und mit den Bremsmitteln (102) durch die Anordnung der Verbindungsmittel dazwischen verbunden ist; wobei die Bremsmittel (102) mindestens eine Nase (105a) umfassen, die mit einer Befestigungsöse (107) versehen ist, und wobei der Sattelkörper (1) mindestens ein Durchgangsloch (12) umfasst, wobei jedes der Verbindungsmittel für die Verbindung der Bremsmittel (102) mit dem Sattelkörper (1) in der mindestens einen Befestigungsöse (107) und in einem entsprechenden Durchgangsloch (12) aufgenommen ist.

## Revendications

1. Corps d'étrier (1), particulièrement pour des freins à disque du type comprenant au moins un disque de frein (100) qui est pourvu de deus surfaces de freinage (101) opposées sur lesquelles il est possible d'actionner des moyens de freinage (102) respectifs, et qui comprend une partie centrale (2) qui a deux côtés sensiblement opposés depuis lesquels deux parties latérales (3) font saillie qui sont destinées à faire face aux deux surfaces de freinage (101) opposées quand le corps d'étrier (1) est agencé de façon à chevaucher ledit disque de frein, ledit corps d'étrier (1) étant en une pièce faite de matériau composite constitué par une matrice de base dans laquelle des fibres de renforcement orientées de manière appropriée sont dispersées et en ce que chacune desdites parties latérales (3) comprend un siège pour accueillir des moyens de freinage (102) respectifs qui peuvent être associés avec ledit corps d'étrier (1) par l'interposition de moyens de connexion, le corps d'étrier (1) étant **caractérisé en ce qu'**il comprend deux parties de connexion (5) qui sont interposées entre les extrémités libres desdites deux parties latérales (3) de façon à définir une surface continue, lesdites deux parties latérales (3) et lesdites deux parties de connexion (5) ayant des volets respectifs de façon à définir un anneau de retenue (6) périmétrique continu dans lequel les fibres de renforcement sont agencées de façon à être orientées le long du périmètre dudit anneau de retenue.

2. Corps d'étrier (1) selon la revendication 1, **caractérisé en ce que** ladite partie centrale (2) comprend une bande de connexion (7), dont les deux extrémités de connexion sont associées à des parties respectives dudit anneau de retenue (6), chacune agencée sur une partie latérale (3) correspondante, ladite bande de connexion (7) ayant des fibres de renforcement agencées sensiblement de façon à être orientées parallèlement les unes aux autres le long de ladite bande de connexion.

3. Corps d'étrier (1) selon la revendication 2, **caractérisé en ce que** les fibres de renforcement de ladite bande de connexion (7) sont agencées sensiblement à angle droit relativement à un plan transversal (110) dudit corps d'étrier, ledit plan transversal central (100) étant sensiblement parallèle à des surfaces opposées (4) desdites parties latérales (3) et transversal par rapport à ladite partie centrale (2).

4. Corps d'étrier (1) selon une ou plusieurs des revendications précédentes, **caractérisé en ce que** chacune desdites parties de connexion (5) comprend au moins une région de renforcement (8) respective, à proximité dudit anneau de retenue (6), dans laquelle les fibres de renforcement sont agencées sensiblement de telle manière qu'elles sont orientées selon au moins deux directions mutuellement incidentes.

5. Corps d'étrier (1) selon la revendication 4, **caractérisé en ce que** lesdites au moins deux directions incidentes sont mutuellement perpendiculaires et sont inclinées considérablement à 45° par rapport audit plan transversal (110) central.

6. Corps d'étrier (1) selon une ou plusieurs des revendications précédentes 4 et 5, **caractérisé en ce qu'**il comprend des zones de connexion qui sont interposées entre ledit anneau de retenue (6), ladite bande de connexion (7) et lesdites régions de renforcement (8) dans lesquelles les fibres de renforcement sont orientées d'une manière aléatoire.

7. Corps d'étrier (1) selon une ou plusieurs des revendications précédentes, **caractérisé en ce que** chacun desdits sièges d'accueil est placé sur une surface opposée (4) respective.

8. Corps d'étrier (1) selon une ou plusieurs des revendications précédentes, **caractérisé en ce que** lesdits moyens de connexion comprennent des éléments filetés (103) qui peuvent être accueillis dans des trous traversants (12) respectifs pratiqués dans le corps d'étrier lui-même.

9. Corps d'étrier (1) selon une ou plusieurs des revendications précédentes, **caractérisé en ce qu'**il comprend au moins deux saillies (9) qui sont proches dudit anneau de retenue (6), lesdites au moins deux saillies (9) étant destinées à contraster le mouvement des moyens de freinage (102) pendant l'action de freinage le long de deux directions qui sont mutuellement opposées et sont coplanaires par rapport aux surfaces de freinage (101) du disque de frein (100).

10. Corps d'étrier (1) selon la revendication 9, **caractérisé en ce qu'**il comprend des moyens de protection (10) pour lesdites au moins deux saillies (9) qui sont conçus pour que les moyens de freinage (102) viennent en contact directement avec eux pendant l'action de freinage.

11. Corps d'étrier (1) selon la revendication 10, **caractérisé en ce que** lesdits moyens de protection (10) sont constitués d'un matériau de céramique.

12. Corps d'étrier (1) selon une ou plusieurs des revendications précédentes, **caractérisé en ce que** lesdites fibres de renforcement sont constituées par au moins un matériau sélectionné dans le groupe qui comprend des fibres d'aramide, des fibres de polyamide, des fibres de polyester, et des fibres de carbone, et ladite matrice de base est faite d'au moins un matériau sélectionné dans le groupe qui comprend des résines phénoliques, des résines d'ester de cyanate, des résines d'ester vinylique, des résines époxy, des résines thermoplastiques et du graphite.

13. Frein à disque (109) du type comprenant au moins un disque de frein (100) pourvu de deux surfaces de freinage (101) opposées sur lesquelles il est possible d'actionner des moyens de freinage (102) respectifs, **caractérisé en ce qu'**il comprend un corps d'étrier (1), selon une ou plusieurs des revendications précédentes, qui est agencé de façon à chevaucher le disque de frein lui-même et est associé auxdits moyens de freinage (102) par l'interposition desdits moyens de connexion, lesdites moyens de freinage (102) comprenant au moins une patte (105a) qui est pourvue d'une fente de fixation (107) et ledit corps d'étrier (1) comprenant au moins un trou traversant (12), chacun desdits moyens de connexion étant accueilli dans ladite au moins une fente de fixation (107) et dans un trou traversant (12) respectif pour la connexion desdits moyens de freinage (102) avec ledit corps d'étrier (1).
